# EUROPEAN PATENT APPLICATION

(11) **EP 0 887 286 A2**
(43) Date of publication of application: **30.12.1998**
(21) Application number: 98202043.0
(22) Date of filing: 18.06.1998
(51) Int. Cl.: B65D 88/12

(54) **A load-carrying apparatus**

(30) Priority: 23.06.1997 GB 9713033
(71) Applicant: Lennox, Albert George, Carrickfergus, Northern Ireland (GB)
(72) Inventor: Lennox, Albert George, Carrickfergus, Northern Ireland (GB)
(74) Representative: O'Connell, Maura, Dr.

(57) **Abstract**

A load-carrying apparatus (10) for transporting and storing a load. The apparatus (10) comprises a platform (12) around the periphery of which is provided at least one detachable side barrier (34) and at least one pivotable end panel (24, 26). The side barriers (34) are mountable on one another to form a wall of variable height and the end panel (24, 26) can be used as a ramp to facilitate the loading of the apparatus. The apparatus (10) has demountable castors (58) so that it may be pushed or pulled by hand. The apparatus (10) is further provided with a plurality of lifting lugs (30) with which it may be lifted by crane (88) onto the back of a skip lorry (90).

## Description

The present invention relates to a load-carrying apparatus. In particular, the present invention relates to a portable load-carrying apparatus for transporting and storing loads.

In many industries there is a requirement for the transporting and storing of loads, which loads are often of a widely varied nature. For example, in the construction industry there is a requirement for transporting and storing loads such as bricks, cement, sand, concrete blocks and metal girders as well as for the disposal of waste materials. A typical organisation will have a variety of different types of vehicle and other equipment to meet its load transporting and storing requirements such as vans with covered or enclosed container sections, open-top lorries, dump trucks, lorries with an on-board crane, free-standing cranes and hand pallets.

Each vehicle or piece of equipment is suited for a particular task or tasks and it is often the case that at any given time some of the vehicles and/or equipment are not being used. This is undesirable since such vehicles and equipment are relatively expensive and represent a significant capital investment for an organisation.

It is an object of the present invention to provide a load-carrying apparatus for transporting and storing loads which apparatus can be employed in a plurality of modes, in conjunction with one or more of said vehicles or other equipment or on its own, to increase the versatility of said vehicle/equipment and reduce the number of different types of vehicle/equipment required by an organisation. It is a further object of the present invention to provide a load-carrying apparatus which facilitates the loading and unloading of a vehicle and facilitates the transporting of loads over short distances. The load-carrying apparatus is particularly suitable for use with a lorry having an on-board crane, such as a conventional skip lorry.

Accordingly, the present invention provides a load-carrying apparatus comprising a base member and a plurality of lug members located around the periphery of the base member characterised in that the base member is a platform member and that barrier means are located around at least a portion of the periphery of the platform member, at least a portion of the barrier means being displacably coupled to the periphery of the platform member.

Preferably, the barrier means comprises at least one first barrier member which has a respective one of a male and female coupling member the other of said male and female coupling member being formed in the platform member so that the at least one first barrier member is detachably mountable on the platform member.

More preferably, there are a plurality of first barrier members each first barrier member having a male coupling member and a female coupling member oppositely disposed thereon so that each first barrier member is mountable on another first barrier member and that when two or more first barrier members are so mounted they are substantially coplanar with one another.

Preferably, the barrier means comprises at least one second barrier member which is pivotably coupled to the platform member, the at least one second barrier member being pivotable between a retaining state, in which the at least one second barrier member functions as a wall around a portion of the platform member, and a non-retaining state in which the at least one second barrier member is engagable with the ground to function as a ramp onto the platform member.

Preferably, the platform member has oppositely disposed first barrier members and oppositely disposed second barrier members, the first barrier members being substantially perpendicular to the second barrier members.

Advantageously, a canopy member is mountable on the barrier means to substantially enclose a load which, in use, is located on the platform member.

Preferably, a respective flap member is pivotably coupled to the platform member adjacent each second barrier member, the respective flap member being arranged so that, when the respective second barrier member is in the retaining state, the respective flap member rests against the second barrier member and, when the respective second barrier member is in the non-retaining state, the respective flap member pivots under gravity into engagement with the respective second barrier member to substantially bridge the gap between the platform member and the respective second barrier member.

Preferably, a plurality of castors are detachably mountable on the in use underside of the platform member.

An embodiment of the invention will now be described by way of example and with reference to the accompanying drawings in which:
Figure 1 is a perspective view of a load-carrying apparatus according to the present invention;
Figure 2 is a perspective view of the apparatus of Figure 1 in a first storing/transporting mode;
Figure 3 is a perspective view of the apparatus of Figure 1 in a second storing/transporting mode;
Figure 4 is a side view of the apparatus of Figure 2 being lifted by a crane;
Figure 5 is a perspective end view of the apparatus of Figure 1 in a tipping mode; and
Figure 6 is a plan view of the underside of the apparatus of Figure 1.

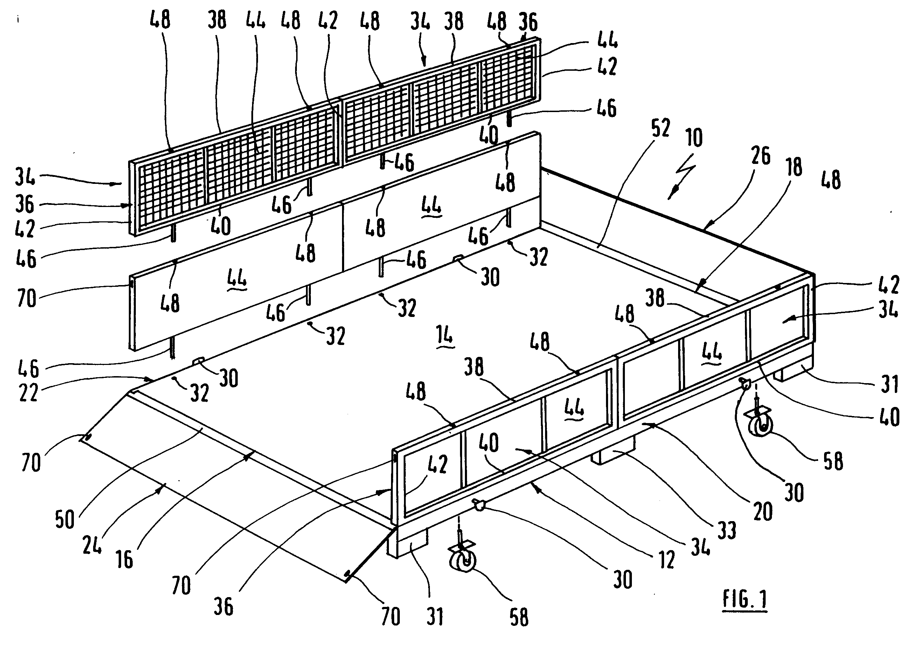

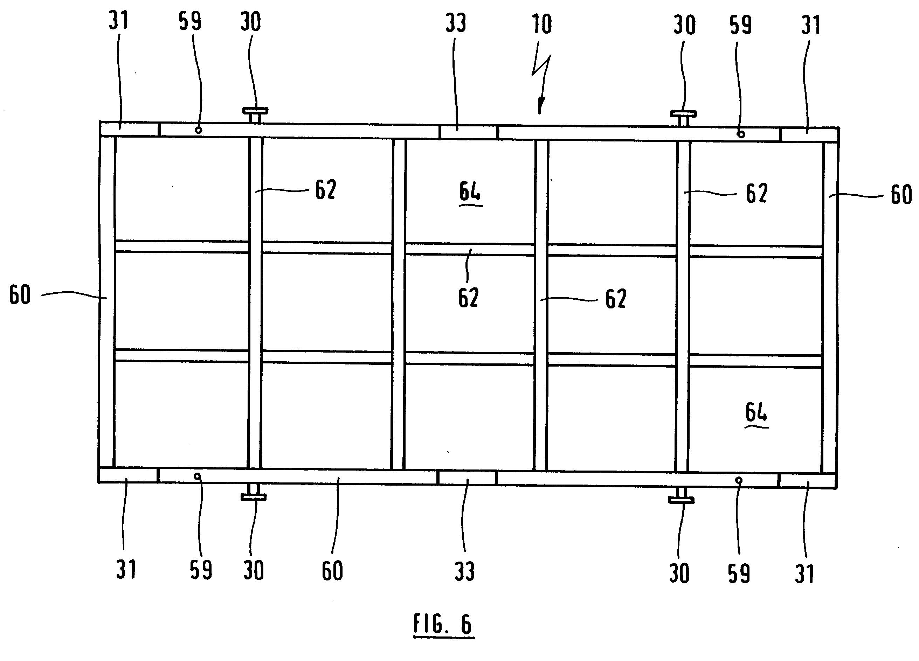

Referring now to Figure 1, there is shown, generally indicated at 10, a load-carrying apparatus according to the present invention. In the present embodiment, the load-carrying apparatus 10 comprises a base member in the form of a platform member or platform 12. The platform 12 is substantially rectangular in shape and has an obverse face 14, a reverse face (visible in Figure 6), first and second oppositely disposed ends 16, 18 and first and second oppositely disposed sides 20, 22. Preferably, the platform 12 has a substantially level surface. It will be appreciated that the platform 12 is not limited to a substantially rectangular shape and may take any suitable shape.

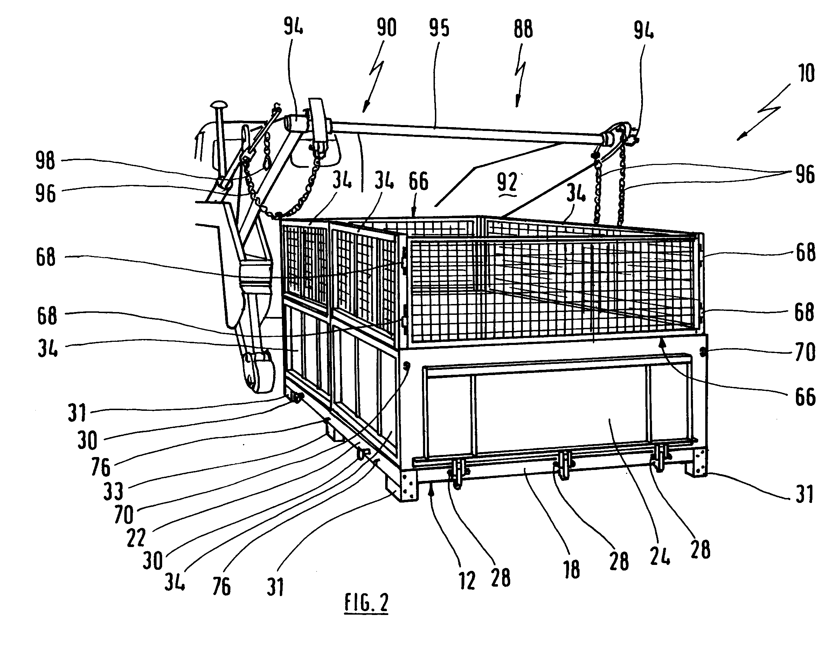

Second barrier members in the form of first and second end panels 24, 26 are pivotably mounted on the platform 12 at the first and second ends 16, 18 respectively by at least one respective hinge 28 (visible in Figure 2). The first and second end panels 24, 26 are, in the present embodiment, substantially rectangular in shape and extend across substantially the entire length of the respective first and second ends 16, 18. The end panels 24, 26 are pivotable between a retaining state (see second end panel 26 in Figure 1), in which the end panel 24, 26 is substantially perpendicularly disposed with respect to the platform 12, and a non-retaining state (see first end panel 24 in Figure 1), in which the end panel 24, 26 makes an obtuse angle with the obverse face 14 of the platform 12. It will be noted that when the platform 12 is resting on the ground (not shown in Figure 1), each end panel 24, 26 engages the ground when in the non-retaining state and thus serves as a ramp to the platform 12. When in the retaining state, each end panel 24, 26 functions as a wall at the respective end 16, 18 of the platform 12.

It will be appreciated that the end panels 24, 26 need not necessarily be substantially rectangular in shape and do not necessarily have to be substantially perpendicular to the platform 12 when in the retaining state. In an alternative embodiment (not illustrated) there may be more than one end panel coupled to each end of the platform 12 in side-by-side arrangement with one another. Alternatively still, the or each end panel may not extend entirely along the length of the respective ends of the platform 12. For example, there may be two spaced-apart end panels pivotably coupled to one or each end of the platform 12.

A plurality of lugs 30 are fixed to the platform 12 adjacent the sides 20, 22. It is preferred that there are four lugs 30, two spaced-apart on each side 20, 22, and that the lugs 30 are symmetrically arranged around the periphery of the platform 12. In the present embodiment, the lugs 30 comprise T-shaped bars which project laterally from their respective sides 20, 22. Alternatively, the lugs 30 may be U-shaped bars or may take another suitable form.

The platform 12 has a respective foot 31 formed at each corner (only two feet visible in Figure 1). In addition, a respective central foot 33 is formed on each side 20, 22 of the platform 12.

A plurality of female coupling members in the form of first pin-receiving sockets 32 are formed in the platform 12 through the obverse face 14 adjacent the sides 20, 22. In the present embodiment, there are eight first pin-receiving sockets 32 in all, four adjacent each respective side 20, 22, although any number of sockets 32 may be provided.

The apparatus 10 further comprises a plurality of first barrier members in the form of side barriers generally indicated at 34. Each side barrier 34 comprises a substantially rectangular frame 36 having respective upper and lower bars 38, 40 joined to one another at their respective ends by respective spaced-apart side bars 42.

The area defined by the upper, lower and side bars 38, 40, 42 is preferably covered by a respective panel 44. Each panel 44 may be plate-like or reticulated, as desired. In the drawings, some of the panels 44 are shown formed from reticulated material such as wire mesh, the other panels 44 being formed as a solid sheet or plate of material. The advantage of having at least some of the panels 44 formed from reticulated material is that a user (not shown) can readily view the load (not shown) carried by the apparatus 10. To this end, the panels 44 could alternatively be formed from perspex or other transparent material.

The side barriers 34 need not necessarily be rectangular in shape nor do they require the provision of panels 44, reticulated or otherwise. For example, in an alternative embodiment (not shown) each side barrier 34 may comprise a post, or a U-shaped bar. A skilled person will readily appreciate that the side barriers 34 may take a wide variety of suitable forms.

At least one respective male coupling member is fixed to each lower bar 40. In the present embodiment, two spaced-apart male coupling members or pins 46 are fixed to each lower bar 40. Each pin 46 projects from the respective lower bar 40 and is disposed in substantially the same plane as the respective side barrier 34. A plurality of similarly spaced-apart second pin-receiving sockets 48 are formed in the respective upper bars 38, oppositely disposed on the respective frame 36 with respect to the respective pins 46.

The side barriers 34 are suitable for inter-engagement with the platform 12 and for inter-engagement with one another. To achieve the former, the respective pins 46 of the side barriers 34 are slotted into respective first pin-receiving sockets 32 on the platform 12. For inter-engagement between side barriers 34, the pins 46 of one side barrier 34 are slotted into the respective second pin-receiving sockets 48 of another side barrier 34. Hence, the side barriers 34 are detachably mountable on the platform 12 and on one another and can be used to build a wall of variable height and width along one or each side 20, 22 of the platform 12. It is preferred that the pins 46 and the sockets 48 are oppositely disposed and aligned on the respective side barriers 34 so that the side barriers 34 are interchangeable. It is also preferred that the pin-receiving sockets 32 on the platform 12 are similar to the pin-receiving sockets 48 so that each side barrier 34 is mountable on the platform 12. It will be appreciated, however, that this does not necessarily need to be the case. For example, the pin-receiving sockets 32 may differ in size and/or shape from the pin-receiving sockets 48 and the side barriers 34 may have respective pins 46 of different sizes and shapes so that only certain types of side barrier 34 can be mounted onto the platform 12.

It will be appreciated that the side barriers 34 and the end panels 24, 26 are displaceable with respect to the platform 12. The side barriers 34 are displaceable in that they are detachable and the end panels 24, 26 are pivotably displaceable. In an alternative embodiment (not shown) the side barriers 34 may be pivotably mounted on the sides 20, 22 of the platform and/or the end panels 24, 26 may be detachably mounted on the respective ends 16, 18. It will be appreciated that there are a plurality of different ways in which the side barriers 34 and end panels 24, 26 or other suitable barrier members can be arranged around the periphery of the platform 12. For example, one or more end panels 24, 26 may be pivotably mounted on one or both sides 20, 22 of the platform 12 and/or one or more side barriers 34 may be detachably mounted on one or both ends 16, 18 of the platform 12. Alternatively, the sides 20, 22 and/or the ends 16, 18 may have a combination of both side barriers 34 and end panels 24, 26 detachably and pivotably mounted thereon respectively. While it is preferred that the or each side barrier 34 and the or each end panel 24, 26 together extend substantially around the entire periphery of the platform 12, this is not essential. Alternatively, the displaceable barrier members may extend only partially around the periphery of the platform 12 leaving one or more gaps between neighbouring barrier members. Such gaps can be left uncovered or can be filled by alternative barriers (not shown) such as a fixed wall section.

In Figure 1, there is shown two side barriers 34 inter-engaged with the side 20 of the platform 12. The side barriers 34 are located side-by-side and extend along substantially the entire length of the side 20. At the opposite side 22 of the platform 12, there is shown, in exploded view, four side barriers 34, a first pair of which are arranged for inter-engagement with the platform, the other pair being arranged for inter-engagement with the first pair to form a wall which is higher than that formed by the side barriers 34 at the side 20 of the platform.

It will be appreciated that in an alternative embodiment (not illustrated), the side barriers 34 may be dimensioned so that one barrier extends substantially along the entire length of the side 20, 22 of the platform or so that more than two side barriers 34 can fit side-by-side along one side 20, 22. The apparatus 10 may alternatively be provided with a plurality of side barriers 34 of different dimensions. It will further be appreciated that, in use, the side barriers 34 can be arranged to extend entirely or partially along the sides 20, 22, as desired.

If it is desired to increase the load-bearing capacity of the side barriers 34 or simply to steady the side barriers 34, a bolt mechanism or latch mechanism (not shown) or similar coupling means can be provided between laterally adjacent side barriers 34 and between the end panels 24, 26 and the respective side barriers 34.

Also, in an alternative embodiment (not shown), the pins 46 can be provided on the platform 12 and on the upper bars 38 of the side barriers 34 while the pin-receiving sockets 32, 48 are correspondingly formed in the respective lower bars 40. It will be appreciated that other conventional forms of corresponding male and female coupling members are equally suitable for inter-engaging the side barriers 34 with the platform 12 and with one another. For example, a single plate-like male coupling member (not shown) can be formed on the lower bar 40 for insertion into a corresponding slot (not shown) formed in the platform 12.

The apparatus 10, including the platform 12, the end panels 24, 26, the side barriers 34 and the lugs 30 can be formed from metals such as galvanised steel or the like. If it is desired for the panels 44 to be reticulated, then galvanised steel or aluminium wire mesh can be used. It will be appreciated that other material may be used depending on the weight of the load which is to be carried.

A respective flap member or flap 50, 52 is pivotably fixed to the platform 12 along the first and second ends 16, 18 respectively using a respective conventional hinge (not shown). Each flap 50, 52 is arranged so that it rests against the respective end panel 24, 26 when in the retaining state. When the respective end panel 24, 26 is actuated into the non-retaining state by a user, each flap 50, 52 pivots under gravity in the same direction as the respective end panel 24, 26 until it once again rests on the panel 24, 26. In this position, each flap 50, 52 bridges the gap between the respective end panel 24, 26 and the respective ends 16, 18 of the platform 12 to provide a substantially continuous surface from the end panel 24, 26 across to the obverse face 14 of the platform 12. Hence, during use loads can readily be wheeled, or driven, up the end panel 24, 26 and onto the platform 12.

A plurality of conventional castors 58 are insertable into respective castor sockets 59 (visible in Figure 6) formed in the underside of the platform 12. In the present embodiment, a pair of spaced-apart castor sockets 59 is formed at each side 20, 22 of the platform 12 so that four castors 58 in all are mountable on the apparatus 10. The castors 58 are secured in place in conventional manner. With the castors 58 mounted, the user can readily push or pull the apparatus 10, loaded or unloaded, by hand over relatively short distances. Alternatively, the apparatus 10 can be towed by a vehicle (not shown).

Figure 6 shows the underside of the apparatus in plan view. The platform 12 comprises a rectangular base frame 60 which is reinforced by a lattice of mutually perpendicular support bars 62. The obverse face 14 of the platform 12 is provided by a plate 64 fixed to the base frame 60 and the lattice of support bars 62.

Referring now to Figure 2, the apparatus 10 is shown in a first transporting/storing mode in which both end panels 24, 26 are in the retaining state and a respective set of four side barriers 34 is mounted on each side 20, 22 of the platform 12, each set comprising two rows of two side barriers 34.

A respective end barrier 66 is mounted between respective opposing side barriers 34 at respective ends 16, 18 of the platform 12 adjacent, and substantially coplanar with, the respective end panels 24, 26. Each end barrier 66 is similar in construction to the side barriers 34 and is detachably mounted to the side barriers 34 by a respective hook and socket mechanism 68 or in any other convenient manner. It will be appreciated that further end barriers 66 (not shown) may be provided to match the height of the side barriers 34, as applicable.

The end panels 24, 26 are held in the retaining state by a respective pair of latch mechanisms 70 which detachably couple the end panels 24, 26 to a respective pair of side barriers 34.

Thus, in the first transporting/storing mode of Figure 2, the apparatus 10 forms an open-roofed container of substantially rectangular cross-section. In this mode, the apparatus can be used to carry loads such as livestock, bricks, sand, cement, soil, small vehicles and machinery and the like. In addition, with the castors 58 mounted, the user can manually push or tow the loaded apparatus 10 over short distances.

Figure 2 also shows a lorry 90 with an on-board crane 88 which will be described in greater detail below.

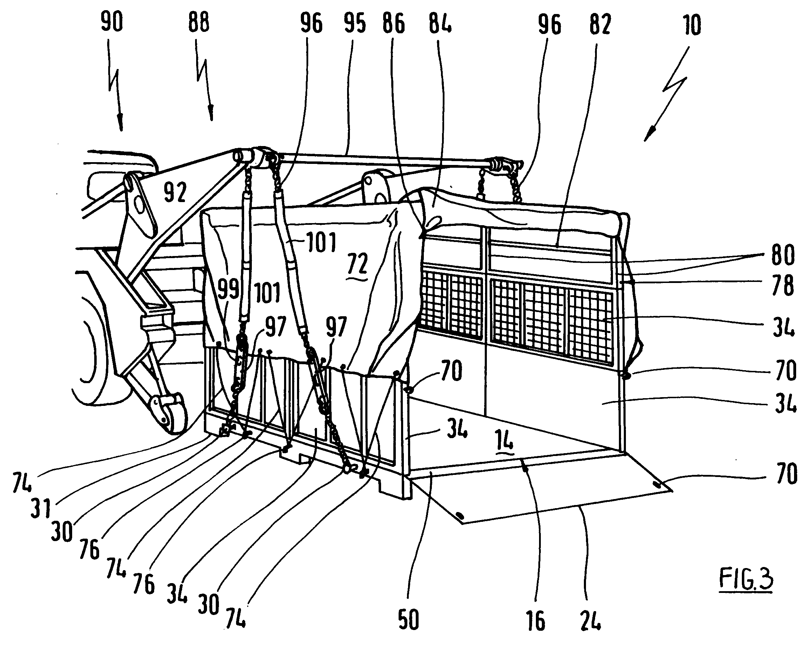

In Figure 3, the apparatus 10 is shown in a second transporting/storing mode. The apparatus is configured in a similar manner to that described for Figure 2 of the drawings. A canopy 72 is fitted over the open roof of the apparatus 10 and secured to the platform 12 via a plurality of guy ropes 74. To this end, a plurality of spaced-apart hooks 76 are fixed to the sides 20, 22 of the platform for anchoring the guy ropes 74. The canopy 72 can be mounted on the, in use, uppermost side barriers 34 and end barriers 66 (or end panels 24, 26, as applicable) or a canopy support frame 78 can be used.

The canopy support frame 78 may comprise additional side barriers 34 and end barriers 66 mounted onto the uppermost existing side barriers 34 and end barriers 66 or, as illustrated in Figure 3, may comprise a plurality of support poles 80 joined by cross-bars 82, the support poles 80 having respective pins (not shown) for slotting into the pin receiving sockets 48 of the side barriers 34 and end barriers 66. The canopy support frame 78 may take alternative suitable forms.

The hooks 76 can also be used to secure loads to the platform 12 using ropes or chains (not shown). For example, if the apparatus 10 is being used in a 'flat' mode, in which the end panels 24, 26 are in the non-retaining state and no side barriers 34 are mounted to the sides 20, 22 of the platform 12, then ropes or chains can be strapped across the load - such as girders or elongate planks of wood - and anchored to the hooks 76 to secure the load in place.

In Figure 3, the apparatus is shown in a loading state in which the end panel 24 is in the non-retaining state and serves as a ramp onto the obverse face 14 of the platform 12. For ease of loading, the end barrier 66, which in Figure 2 is adjacent the end panel 24, is removed and a flap portion 84 of the canopy 72, as defined by a zip mechanism 86, is opened. In this state, loads can readily be wheeled, carried or driven into the apparatus 10. Once the apparatus 10 is loaded, the end panel 24 is moved to the retaining state, the end barrier 66 is mounted above the end panel 24 and the flap portion 84 of the canopy 72 is zipped closed. Thus, in the second loading/transporting mode, the apparatus forms a substantially closed container of substantially rectangular cross-section and the load is shielded at all sides from the surrounding environment.

The second loading/transporting mode is particularly advantageous when the apparatus 10 is carrying loads such as furniture and the like, which are susceptible to damage by environmental conditions.

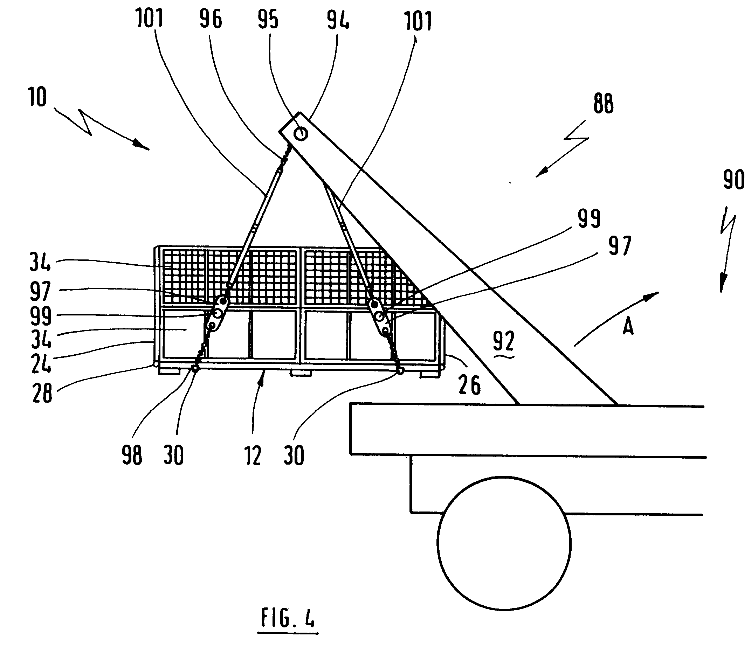

In Figure 4, the on-board crane 88 is shown having two spaced-apart parallel lifting arms 92 which are joined at their respective ends 94 by a lifting bar 95. The crane 88 has two spaced-apart pairs of chains 96, each pair being pivotably fixed to the lifting bar 95 adjacent the respective end 94 of a respective lifting arm 92. Each chain 96 has a lifting ring 98 (visible in Figure 2) for coupling to a respective lug 30 on the platform 12. The respective lifting rings 98 are locatable over respective lugs 30 to couple the apparatus 10 to the crane 88. The chains 96 have respective protective claddings 101 to prevent the chains 96 from damaging the load or the apparatus 10.

Preferably, the lifting rings 98 and the ends of the lugs 30 are substantially the same shape so that the lifting rings 98 can only fit over the ends of the lugs 30 in one relative orientation. This reduces the possibility that the lifting rings 98 may slip off the lugs 30 during use. Preferably, the lifting rings 98 and the ends of the lugs 30 are substantially pear-shaped.

Referring now to Figure 4, the apparatus 10 is shown in the first storing/transporting mode being lifted onto the lorry 90 by the on-board crane 88. The lifting ring 98 of each chain 96 is coupled to a respective lug 30 and the crane 88 is supporting the apparatus 10 above the ground via the chains 96. As the lifting arms 92 pivot in the direction indicated by the arrow A, the apparatus 10 is lifted over the lorry 90 and can be deposited thereon for transportation to a desired location. It will be appreciated that the chains 96 must be long enough to enable the crane 88 to set the apparatus down on the lorry 90. In some cases, the lorry 90 will also be used to transport other items such as skips (not shown) which have respective lugs similar to the lugs 30. In use, unlike the lugs 30, the skip's lugs are not at ground level and so the crane 88 would normally require two sets of pairs of chains 96, each set being of different length to enable the crane 88 to lift either a skip or the apparatus 10 and set them on the lorry 90. Alternatively, there is provided a lug-receiving plate 97 in each chain 96, which lug-receiving plate 97 defines a lug-receiving aperture 99. The lug-receiving plate 97 is positioned on the respective chains 96 to suit the in use location of the skip lugs. Thus, a single set of chains 96 can be used to lift different objects having lugs in different locations.

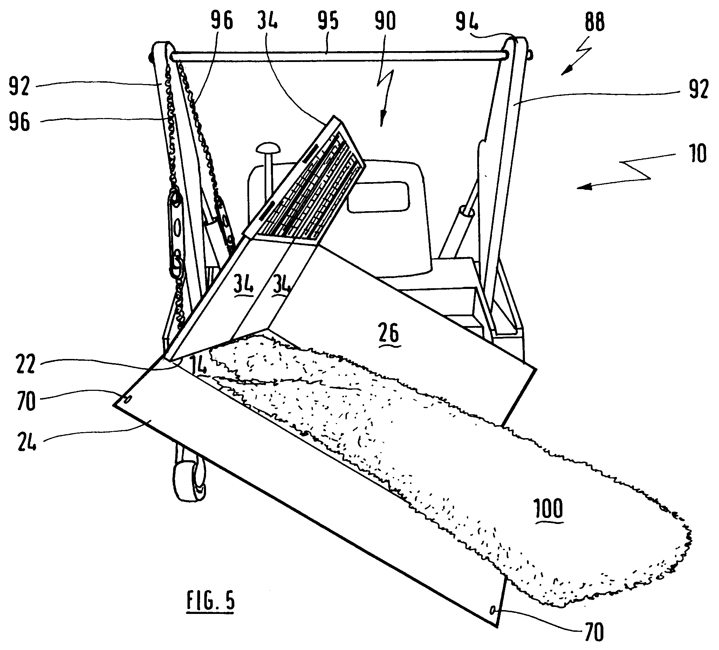

Referring now to Figure 5, the apparatus 10 is shown in a tipping mode. The side barriers 34 are removed from the first side 20 of the platform 12 and the lifting rings 98 of the chains 96 are coupled only to the lugs 30 which are located along the side 22 of the platform 12. Thus, when the crane 88 is actuated to lift the apparatus 10 from the ground, the apparatus 10 is lifted at one side 22 only thereby causing a load 100 to slide off the platform 12 via the first side 20 under gravity. The end panels 24, 26 are shown in Figure 5 in the non-retaining state and the retaining state respectively although it will be appreciated that, in practice, they may adopt either the retaining or non-retaining state during this 'side' tipping operation.

It will further be appreciated that, similarly, the load 100 can be tipped from the platform out of the second side 22. Alternatively, the load can be tipped from the platform 12 via the first or second ends 16, 18 by actuating the end panel 24, 26 respectively into the non-retaining state and coupling one respective chain 96 to each side 20, 22 of the platform 12. Thus, by selecting which chains 96 to attach and which of the side barriers 34 and end panels 24, 26 to displace, the user can tip a load from the platform 12 in one of a plurality of different directions.

It will be appreciated that the apparatus 10 can be used in a variety of other modes or configurations (not illustrated) depending on the nature of the load to be transported. For example, during use the end panels 24, 26 can be left in the retaining state or non-retaining state, as applicable, and the side barriers 34 can be mounted on the platform 12 or omitted as desired.

A conventional skip-lorry (not shown) is of similar construction to the lorry 90 and, during normal use, lifts and transports a skip (not shown) or similar large container. Typically, however, skips are delivered to a site in the morning and collected in the evening thereby causing the skip-lorry to be redundant for most of the day. The apparatus 10 of the present invention can be used in conjunction with a conventional skip-lorry to lift and transport a diverse range of loads, as outlined in the foregoing. The skip-lorry can therefore be utilised for the entire day in a variety of different tasks. It is particularly advantageous that the apparatus 10 can, when not in use, be substantially 'flat-packed' and so be stored on the back of a skip-lorry, or similar lorry, even when the lorry is carrying a skip.

Thus, the apparatus 10 of the present invention can, in conjunction with a skip-lorry, or similar lorry, serve as a van with covered or enclosed container section, an open-top container lorry, or a dump truck. It should also be noted that the apparatus 10 is easier to load and unload than conventional vans and container lorries. In addition, the apparatus 10 can store a load and shield it from the environment and, with the castors 58 in place, can be used as a trolley. The apparatus 10 can also serve as a load-bearing pallet for use with conventional cranes or other lifting gear (not shown). Hence, the apparatus 10 reduces the number of different types of vehicle and equipment required by an organisation.

## Claims

1. A load-carrying apparatus (10) comprising a base member (12) and a plurality of lug members (30) located around the periphery of the base member (12) characterised in that the base member (12) is a platform member and that barrier means (24, 26, 34) are located around at least a portion of the periphery of the platform member (12), at least a portion of the barrier means being displacably coupled to the periphery of the platform member (12).

2. A load-carrying apparatus (10) according to Claim 1, in which the barrier means comprises at least one first barrier member (34) which has a respective one of a male and female coupling member (46, 32), the other of said male and female coupling member (46, 32) being formed in the platform member (12) so that the at least one first barrier member (34) is detachably mountable on the platform member (12).

3. A load-carrying apparatus (10) according to Claim 2, in which there are a plurality of first barrier members (34), each first barrier member (24) having a male coupling member (46) and a female coupling member (48) oppositely disposed thereon so that each first barrier member (34) is mountable on another first barrier member (34) and that when two or more first barrier members (34) are so mounted they are substantially coplanar with one another.

4. A load-carrying apparatus (10) according to any preceding claim, in which the barrier means comprises at least one second barrier member (24, 26) which is pivotably coupled to the platform member (12), the at least one second barrier member being pivotable between a retaining state, in which the at least one second barrier member (24, 26) functions as a wall around a portion of the platform member (12), and a non-retaining state in which the at least one second barrier member (24, 26) is engagable with the ground to function as a ramp onto the platform member (12).

5. A load-carrying apparatus (10) according to Claims 2, 3 and 4, in which the platform member (12) has oppositely disposed first barrier members (34) and oppositely disposed second barrier members (24, 26), the first barrier members (34) being substantially perpendicular to the second barrier members (24, 26).

6. A load-carrying apparatus (10) according to any preceding claim, in which a canopy member (72) is mountable on the barrier means to substantially enclose a load which, in use, is located on the platform member (12).

7. A load-carrying apparatus (10) according to Claim 4, in which a respective flap member (50, 52) is pivotably coupled to the platform member (12) adjacent each second barrier member (24, 26), the respective flap member being arranged so that, when the respective second barrier member (24, 26) is in the retaining state, the respective flap member (50, 52) rests against the second barrier member (24, 26) and, when the respective second barrier member (24, 26) is in the non-retaining state, the respective flap member (50, 52) pivots under gravity into engagement with the respective second barrier member (24, 26) to substantially bridge the gap between the platform member (12) and the respective second barrier member (24, 26).

8. A load-carrying apparatus (10) according to any preceding claim in which a plurality of castors (58) are detachably mountable on the in use underside of the platform member (12).
